# EUROPÄISCHE PATENTSCHRIFT

(11) **EP 3 085 956 B1**
(45) Veröffentlichungstag und Bekanntmachung des Hinweises auf die Patenterteilung: **15.11.2017**
(21) Anmeldenummer: 15164479.6
(22) Anmeldetag: 21.04.2015
(51) Int. Cl.: F03D 7/02, F15D 1/10

(54) **TURM FÜR EINE WINDENERGIEANLAGE SOWIE VERFAHREN ZUM ERRICHTEN EINER WINDENERGIEANLAGE**
TOWER FOR A WIND TURBINE AND METHOD OF ERECTING A WIND ENERGY TOWER
TOUR POUR ÉOLIENNE ET PROCÉDÉ DE MONTAGE D'UNE ÉOLIENNE

(43) Veröffentlichungstag der Anmeldung: 26.10.2016
(73) Patentinhaber: Nordex Energy GmbH, 22419 Hamburg (DE)
(72) Erfinder: Trame, Michael, 24114 Kiel (DE); Müller, Sarah, 22769 Hamburg (DE)
(74) Vertreter: Hauck Patentanwaltspartnerschaft mbB

(56) Entgegenhaltungen:
- WO-A1-98/19018
- US-A- 3 581 449
- NAKAMURA H ET AL: "Omnidirectional reductions in drag and fluctuating forces for a circular cylinder by attaching rings", JOURNAL OF WIND ENGINEERING AND INDUSTRIAL AERODYNAMICS, ELSEVIER, AMSTERDAM, NL, Bd. 96, Nr. 6-7, 1. Juni 2008 (2008-06-01) , Seiten 887-899, XP022705059, ISSN: 0167-6105, DOI: 10.1016/J.JWEIA.2007.06.016 [gefunden am 2008-04-15]

## Beschreibung

Die vorliegende Erfindung betrifft einen Turm für eine Windenergieanlage. Weiterhin betrifft die Erfindung ein Verfahren zum Errichten einer Windenergieanlage.

Neben zahlreichen Belastungen, die für den Turm einer Windenergieanlage im Hinblick auf die Tragfähigkeit und Gebrauchstauglichkeit zu berücksichtigen sind, sind insbesondere bei sehr hohen Türmen Schwingungen ein wichtiger Aspekt. Ein bekanntes Phänomen ist die Kärmänsche Wirbelstraße, wobei sich hinter einem umströmten Körper gegenläufige Wirbel ausbilden. Solche Wirbel können den Turm einer Windenergieanlage zu Schwingungen anregen. Hierbei schwingt der Turm mit teilweise großer Amplitude quer zur Windrichtung, dieses Phänomen ist daher als wirbelerregte Querschwingung bekannt. Es tritt insbesondere dann auf, wenn die Windenergieanlage sich nicht im Produktionsbetrieb, sondern im Stillstand befindet oder wenn während der Errichtung der Windenergieanlage der Turm noch ohne Gondel und Rotor ist.

Aus der GB 907 851 A ist es bekannt, an langgestreckten, umströmten Körpern Stege schraubenförmig anzubringen, um die Entstehung einer Wirbelstraße hinter dem Körper zu verhindern. Aus der DE 10 2010 009 435 A1 ist die Verwendung solcher Scruton-Spiralen an Windenergieanlagen bekannt.

Aus der GB 2 362 938 A ist es bekannt, an langgestreckten Körpern Vorwölbungen anzubringen, um Kräfte infolge von Wirbeln zu mindern. Insbesondere zeigt diese Veröffentlichung in Figur 8 mehrere, auf unterschiedlichen Höhen und über den Umfang versetzt zueinander angeordnete Vorwölbungen an einem Turm einer Windenergieanlage.

Aus der EP 1 515 040 A1 ist es bekannt, zur Verringerung der Schallabstrahlung einer Windenergieanlage eine Schallhülle vorzusehen, welche die Außenseite eines Turms der Windenergieanlage zumindest teilweise umgibt und sich in einem Abstand von der Außenseite des Turms befindet.

Aus dem Artikel "Reductions in Drag and Fluctuating Forces for a Circular Cylinder by Attaching Cylindrical Rings" von Hajime Nakamura und Tamotsu Igarashi, Journal of Fluid Science and Technology, Vol. 2 (2007) Nr. 1, S. 12-22 (DOI: 10.1299/jfst.2.12) ist bekannt, dass das Anbringen von zylindrischen Ringen an einem umströmten Zylinder zu einer Reduzierung von Schub- und Wechselkräften an dem Zylinder führt. Ähnliche Maßnahmen sind aus dem Artikel "Omnidirectional reductions in drag and fluctuating forces for a circular cylinder by attaching rings" von H. Nakamura und T. Igarashi, Journal of Wind Engineering and Industrial Aerodynamics, Vol. 96 (2008), S. 887-899 bekannt.

Aus dem US-Patent Nr. 3,581,449 ist ein Turm, insbesondere ein Antennenmast, mit den Merkmalen des Oberbegriffs des Anspruchs 1 bekannt.

Der Erfindung liegt die Aufgabe zugrunde, einen Turm für eine Windenergieanlage bereitzustellen, bei dem wirbelerregte Querschwingungen vermieden werden.

Erfindungsgemäß wird die Aufgabe durch einen Turm für eine Windenergieanlage mit den Merkmalen des Anspruches 1 gelöst. Die Aufgabe wird ebenfalls gelöst durch ein Verfahren zum Errichten einer Windenergieanlage mit den Merkmalen des Anspruches 12. Vorteilhafte Ausgestaltungen bilden die Gegenstände der Unteransprüche.

Der Turm für eine Windenergieanlage gemäß der Erfindung weist einen Sockelabschnitt auf, mit dem er mit einem Fundament verbunden bzw. auf diesem aufgestellt werden kann. Weiterhin weist er einen Turmkopf auf, auf dem eine Gondel der Windenergieanlage angebracht werden kann. Der Turm ist rohrförmig, insbesondere zylindrisch und/oder abschnittsweise konisch. Auf mindestens einer vorgegebenen Höhe umgibt den Turm ein aerodynamisch wirksames Ringelement, das konzentrisch mit der Längsachse des Turms ist. Das Ringelement hat eine Mantelfläche mit einem Durchmesser und einer Länge, wobei der Durchmesser mindestens 1,05mal so groß ist wie der Außendurchmesser des Turms auf der vorgegebenen Höhe und die Länge der Mantelfläche mindestens halb so groß ist wie dieser Außendurchmesser. Beispielsweise kann der Durchmesser der Mantelfläche etwa 1,3mal so groß sein wie der Außendurchmesser des Turms und die Länge etwa dem Durchmesser der Mantelfläche entsprechen.

Wenn das Ringelement lediglich aus einem die Mantelfläche bildenden Element besteht, kann am oberen und unteren Ende des Ringelements ein Spalt zwischen der Außenseite des Turms und dem Ringelement offen bleiben. Bei der Erfindung wird dieser Spalt durch eine Ringfläche geschlossen, diese Ringfläche ist bevorzugt eben.

Das Ringelement ist weiter bevorzugt kreiszylindrisch. An einem zylindrischen Turmabschnitt angebracht, weist die Mantelfläche dann einen gleichmäßigen Abstand von der Außenseite des Turms auf.

An einem konischen Turmabschnitt angebracht, das heißt, der Außendurchmesser des Turms wird von unten nach oben geringer, ist in einer Ausführungsform das Ringelement so gestaltet, dass sein Innendurchmesser derart auf den Außendurchmesser des Turms anliegt und ohne weitere Befestigung an dem Turm hält.

In einer weiteren Ausführungsform ist das Ringelement lösbar an dem Turm befestigt. Vorzugsweise werden zum lösbaren Befestigen Schrauben eingesetzt; weiter vorzugsweise wird eine Magnethalterung oder eine Kombination dieser Techniken verwendet.

Bevorzugt besteht das Ringelement aus zwei oder mehr Ringsegmenten, die sich jeweils über einen Teil des Umfangs erstrecken und zusammen das Ringelement bilden. Die Ringsegmente werden lösbar miteinander verbunden.

Bevorzugt besteht das Ringelement aus einem Faserverbundmaterial, einem Holzwerkstoff, Stahl, einem Kunststoffmaterial oder einer Kombination dieser Werkstoffe.

Bevorzugt werden an einem Turm mehrere Ringelemente in einem Abstand voneinander angebracht. Der Abstand zwischen zwei benachbarten Ringelementen entspricht dabei zwischen 2 und 10 Außendurchmessern des Turms, beispielsweise rund 3 bis rund 6 Außendurchmessern.

Das erfindungsgemäße Verfahren nach Anspruch 12 dient zum Errichten einer Windenergieanlage. Das Verfahren kann insbesondere die Errichtung eines erfindungsgemäßen Turms einschließen. Die obigen Erläuterungen der Merkmale und Vorteile des Turms gelten daher für das Verfahren entsprechend.

Bei dem Verfahren wird zunächst ein Turm bereitgestellt. Dabei ist der Turm zunächst in seiner Längsrichtung in rohrförmige Abschnitte, die auch als Turmsektionen bezeichnet werden, unterteilt. Jede Turmsektion kann eine kreiszylindrische oder konische Gestalt haben. Bei einer konischen Gestalt verjüngt sich die Turmsektion von unten nach oben, nach der Errichtung hat eine konische Turmsektion also an ihrem unteren Ende einen größeren Außendurchmesser als an ihrem oberen Ende. Vor der Errichtung wird an mindestens einer Turmsektion ein aerodynamisch wirksames Ringelement angebracht, das konzentrisch mit der Längsachse der Turmsektion ist. Das Ringelement hat eine Mantelfläche mit einem Durchmesser und einer Länge, wobei der Durchmesser mindestens 1,05mal so groß
ist wie der Außendurchmesser der Turmsektion und die Länge der Mantelfläche mindestens halb so groß ist wie dieser Außendurchmesser. Beispielsweise kann der Durchmesser der Mantelfläche etwa 1,3mal so groß sein wie der Außendurchmesser der Turmsektion und die Länge etwa dem Durchmesser entsprechen.

In einem weiteren Schritt wird der Windenergieanlagenturm errichtet, indem zunächst die unterste Turmsektion auf ein Fundament gestellt und mit diesem verbunden wird, sodann eine weitere Turmsektion auf die erste gestellt und mit dieser verbunden wird und so weiter. Dabei werden Turmsektionen, an denen Ringelemente angebracht sind, so in die Reihenfolge des Errichtens einbezogen, dass die Ringelemente sich nach der Errichtung in der vorgegebenen Höhe befinden. Damit sind bereits unmittelbar nach der Errichtung die Ringelemente aerodynamisch wirksam und verhindern, dass es zu wirbelerregten Schwingungen des Turms kommt, bevor noch die Windenergieanlage vollständig errichtet ist.

Anschließend wird die Gondel der Windenergieanlage auf dem Turm befestigt, so dass sie von dem Turm getragen wird und sich um die Längsachse des Turms drehen kann, um später im Betrieb die Windenergieanlage der wechselnden Windrichtung nachzuführen. Schließlich wird der Rotor angebracht und die Windenergieanlage kann in Betrieb genommen werden.

Wenn die Ringelemente in späteren Phasen, wenn die Windenergieanlage nicht in Betrieb ist, ebenfalls wirbelerregte Schwingungen verhindern sollen, können sie am Turm der Windenergieanlage verbleiben. In einer Ausgestaltung werden sie wieder entfernt, nachdem die Gondel und der Rotor auf dem Turm angebracht wurden.

Die Erfindung wird nachfolgend anhand von Figuren im Detail beschrieben. Es zeigen:
- Fig. 1: eine Windenergieanlage mit einem erfindungsgemäßem Turm und
- Fig. 2: einen erfindungsgemäßen Turm für eine Windenergieanlage.

Eine Möglichkeit, die Wirbelablösung im Nachlauf eines Zylinders zu beeinflussen, ist, die Oberfläche des Zylinders so zu modifizieren, dass horizontale Wirbel entstehen, die sich parallel zur Strömungsrichtung ablösen. Eine ideale Form wäre dabei eine wellenförmige Oberfläche des Zylinders, die an die Form der Vibrisse einer Seerobbe angelehnt ist. Da eine Umsetzung einer wellenförmigen Oberfläche des Turms einer Windenergieanlage nur schwierig und unter hohen Kosten zu realisieren ist, wird hier eine Alternative betrachtet, die von der wellenförmigen Oberfläche abgeleitet ist. In bestimmten Abständen werden, wie in den Figuren gezeigt, zylindrische Ringelemente 10, 11 an dem Turm 2 installiert, was einen ähnlichen Einfluss auf die Wirbelablösung nimmt.

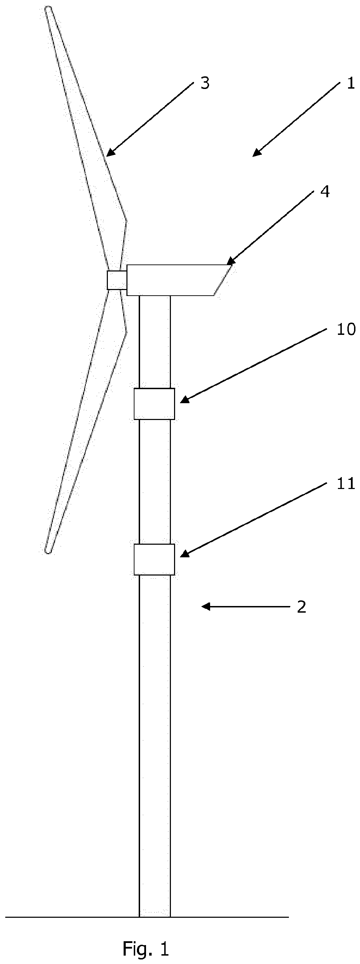

Figur 1 zeigt eine Windenergieanlage 1, die einen Turm 2, eine drehbar auf dem Turm 2 gelagerte Gondel 4 und einen in der Gondel 4 gelagerten Rotor 3 aufweist. In der Gondel 4 befinden sich Einrichtungen zum Umwandeln der Energie aus der Drehbewegung des Rotors 3 in elektrische Energie, insbesondere mindestens ein Generator. An dem Turm 2 sind zylindrische Ringelemente 10, 11 installiert, die nachfolgend auch einfach als Ringe 10, 11 bezeichnet werden.

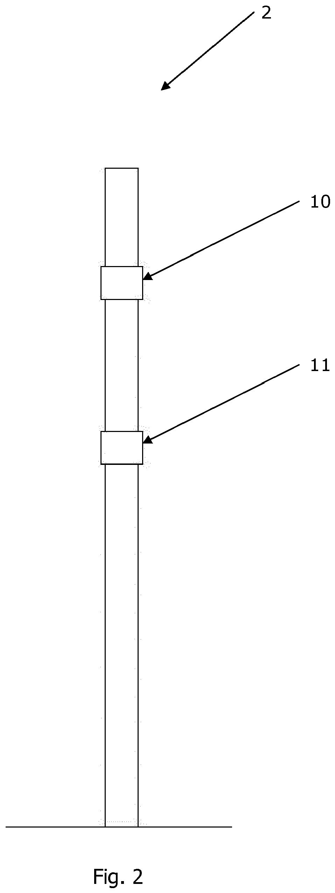

Figur 2 zeigt einen Turm für eine Windenergieanlage 2, noch ohne Gondel und Rotor. Dies ist ein Zustand, wie er während der Errichtung einer Windenergieanlage auftritt. Die Ringe 10, 11 sind bereits angebracht. Durch eine eventuelle Vormontage im Werk oder am Boden auf der Baustelle ist das System direkt nach der Errichtung der entsprechenden Turmsektion aktiv.

Die Ringe 10, 11 haben dabei einen größeren äußeren Durchmesser als der Turm 2 selbst und haben eine vom Durchmesser abhängige Höhe. Der Einfluss der Ringe 10, 11 auf die Strömung hängt dabei stark von der Geometrie der Ringe 10, 11, also Länge, Durchmesser und Abstand zwischen den Ringen 10, 11, ab. In den Figuren gezeigt sind jeweils zwei Ringe 10, 11, wobei der obere Ring 10 einen anderen Durchmesser und/oder eine andere Länge aufweisen kann als der untere Ring 11, entsprechend dem Außendurchmesser des Turms 2 auf der jeweiligen Höhe.

Das Ablösen der Wirbel hinter einem normalen zylindrischen Gebilde ist ein zweidimensionales Phänomen. Das heißt, es gibt keine bzw. nur sehr geringe Strömungskomponente in vertikaler Richtung. Durch das Anbringen der zylindrischen Ringe wird dieses Phänomen zu einem dreidimensionalen. Es bilden sich neben den vertikalen Wirbelsäulen auch horizontale Wirbel an den oberen und unteren Kanten der Ringe 10, 11. Dadurch gabelt sich die Strömung hinter den Ringen auf und die vertikalen Wirbelsäulen werden unterbrochen. Außerdem sorgen die dadurch hervorgerufenen Unterschiede im Durchmesser der Struktur für unterschiedliche Ablösefrequenzen der Wirbel. Dies und die vertikalen Strömungskomponenten durch die horizontalen Wirbel führen zu stark variierenden Ablösepunkten der Wirbel am Umfang des Turms und dadurch zu einer Reduzierung der Korrelationslänge. Das führt zu einer Schwächung bzw. Unterdrückung der Kärmänschen Wirbelstraße.

Die zylindrischen Ringe 10, 11 nehmen ebenfalls einen passiven Einfluss auf die Wirbelablösung. Fertigung und Installation der Ringe 10, 11 ist, aufgrund der einfachen Bauteile, mit relativ geringem Aufwand durchführbar. Da auf den Ringen 10, 11 nur eine Belastung durch den Wind besteht, können diese aus sehr leichten und vor allem günstigen Materialien bestehen. So ist es beispielsweise möglich, die Ringe 10, 11 aus recyceltem Kunststoff, GFK, Holz oder Stahl zu fertigen.

Die einfache Geometrie der Ringe 10, 11 macht es auch möglich, diese an bestehenden Türmen nachzurüsten oder schnell und einfach als temporäre Lösung an Türmen im Montagezustand zu befestigen. Eine Möglichkeit bietet eine Konizität der Turmsektion, mit deren Hilfe es möglich ist, einen Ring 10, 11 auf einer bestimmtem Position zu halten, ohne weitere Hilfsmittel zu benötigen. Auch die Verwendung von Magneten würde das Anbringen solcher Ringe 10, 11 auf der Außenseite des Turms 2 ermöglichen. Wenn die Ringe 10, 11 nach Abschluss der Errichtung und Inbetriebnahme der Windenergieanlage 1 nicht länger benötigt werden, können sie so einfach wieder demontiert werden, ohne Spuren am Turm 2 zu hinterlassen.

### Bezugszeichen

- 1: Windenergieanlage
- 2: Turm
- 3: Rotor
- 4: Gondel
- 10: (oberes) Ringelement
- 11: (unteres) Ringelement

## Patentansprüche

1. Turm (2) für eine Windenergieanlage (1), der mindestens ein aerodynamisch wirksames Ringelement (10, 11), das den Turm (2) auf einer vorgegebenen Höhe konzentrisch umgibt und eine Mantelfläche mit einem Durchmesser und einer Länge aufweist, **dadurch gekennzeichnet, dass** der Durchmesser der Mantelfläche mindestens 105 % des Außendurchmessers des Turms (2) auf der vorgegebenen Höhe und die Länge der Mantelfläche mindestens 50 % dieses Außendurchmessers beträgt und dass ein Ringspalt am oberen und/oder unteren Ende des Ringelements (10, 11) von einer Ringfläche des Ringelements (10, 11) geschlossen ist, wobei der Turm (2) einen Sockelabschnitt zur Verbindung mit einem Fundament und einen Turmkopf zur Verbindung mit einer Gondel (4) aufweist.

2. Turm (2) für eine Windenergieanlage (1) nach Anspruch 1, **dadurch gekennzeichnet, dass** die Mantelfläche einen gleichmäßigen Abstand von der Außenseite des Turms (2) aufweist.

3. Turm (2) für eine Windenergieanlage (1) nach Anspruch 1 oder 2, **dadurch gekennzeichnet, dass** sich der Außendurchmesser des Turms (2) im Bereich der vorgegebenen Höhe nach oben verjüngt und das mindestens eine Ringelement (10, 11) einen Innendurchmesser aufweist, der derart auf den Außendurchmesser des Turms (2) abgestimmt ist, dass das Ringelement (10, 11) auf der vorgegebenen Höhe an dem Turm (2) anliegt, wobei das Ringelement (10, 11) ohne weitere Befestigung an dem Turm (2) verbleibt.

4. Turm (2) für eine Windenergieanlage (1) nach einem der Ansprüche 1 bis 3, **dadurch gekennzeichnet, dass** das mindestens eine Ringelement (10, 11) lösbar an dem Turm (2) befestigt ist.

5. Turm (2) für eine Windenergieanlage (1) nach Anspruch 4, **dadurch gekennzeichnet, dass** das mindestens eine Ringelement (10, 11) mit dem Turm (2) verschraubt ist.

6. Turm (2) für eine Windenergieanlage (1) nach Anspruch 4 oder 5, **dadurch gekennzeichnet, dass** das mindestens eine Ringelement (10, 11) eine Magnethalterung aufweist, mit der es an dem Turm (2) befestigt ist.

7. Turm (2) für eine Windenergieanlage (1) nach einem der Ansprüche 1 bis 6, **dadurch gekennzeichnet, dass** das mindestens eine Ringelement (10, 11) aus mindestens zwei sich jeweils über einen Teil des Umfangs des Ringelements (10, 11) erstreckenden Ringsegmenten besteht, die lösbar miteinander verbunden sind.

8. Turm (2) für eine Windenergieanlage (1) nach einem der Ansprüche 1 bis 7, **dadurch gekennzeichnet, dass** das Ringelement (10, 11) aus einem Faserverbundmaterial und/oder aus einem Holzwerkstoff und/oder aus Stahl und/oder aus einem Kunststoffmaterial gefertigt ist.

9. Turm (2) für eine Windenergieanlage (1) nach einem der Ansprüche 1 bis 8, **dadurch gekennzeichnet, dass** mehrere der Ringelemente (10, 11) in einem Abstand voneinander an dem Turm (2) angeordnet sind.

10. Turm (2) für eine Windenergieanlage (1) nach Anspruch 9, **dadurch gekennzeichnet, dass** der Abstand zwischen zwei benachbarten Ringelementen (10, 11) im Bereich von 2 bis 10 Außendurchmessern des Turms (2) auf Höhe des oberen der beiden benachbarten Ringelemente (10) beträgt.

11. Windenergieanlage (1) mit einem Turm (2) nach einem der Ansprüche 1 bis 10, einer Gondel (4) und einem drehbar in der Gondel (4) gelagerten Rotor (3).

12. Verfahren zum Errichten einer Windenergieanlage (1) mit den folgenden Schritten:
• Bereitstellen eines Windenergieanlagenturms (2),
• Anordnen mindestens eines aerodynamisch wirksamen Ringelements (10, 11), das eine Mantelfläche mit einem Durchmesser und einer Länge aufweist, an dem Windenergieanlagenturm (2), so dass das Ringelement (10, 11) den Windenergieanlagenturm (2) auf einer vorgegebenen Höhe konzentrisch umgibt, wobei der Durchmesser der Mantelfläche des Ringelements (10, 11) mindestens 105 % des Außendurchmessers des Windenergieanlagenturms (2) auf der vorgegebenen Höhe und die Länge der Mantelfläche mindestens 50 % dieses Außendurchmessers beträgt und ein Ringspalt am oberen und/oder unteren Ende des Ringelements (10, 11) von einer Ringfläche des Ringelements (10, 11) geschlossen ist,
• Errichten des Windenergieanlagenturms (2),
• Befestigen einer Gondel (4) und eines Rotors (3) auf dem Windenergieanlagenturm (2).

13. Verfahren nach Anspruch 12, **dadurch gekennzeichnet, dass** das mindestens eine Ringelement (10, 11) nach dem Befestigen der Gondel (4) und des Rotors (3) wieder von dem Windenergieanlagenturm (2) entfernt wird.

14. Verfahren nach Anspruch 12 oder 13, **dadurch gekennzeichnet, dass** sich der Außendurchmesser des Turms (2) im Bereich der vorgegebenen Höhe nach oben verjüngt und das mindestens eine Ringelement (10, 11) einen Innendurchmesser aufweist, der so auf den Außendurchmesser des Turms (2) abgestimmt ist, dass das Ringelement (10, 11) auf der vorgegebenen Höhe an dem Turm (2) anliegt, wobei das Ringelement (10, 11) ohne weitere Befestigung an dem Turm (2) verbleibt.

## Claims

1. A tower (2) for a wind turbine (1), which has at least one aerodynamically effective annular element (10, 11), which surrounds the tower (2) concentrically at a predetermined height and has a shell surface with a diameter and a length, **characterized in that** the diameter of the shell surface is at least 105% of the outer diameter of the tower (2) at the predetermined height and the length of the shell surface is at least 50% of this outer diameter and **in that** an annular gap on the upper and/or lower end of the annular element (10, 11) is closed by an annular surface of the annular element (10, 11), wherein the tower (2) has a base section for connection with a foundation and a tower head for connection with a nacelle (4).

2. The tower (2) for a wind turbine (1) according to claim 1, **characterized in that** the shell surface has an even distance from the outside of the tower (2).

3. The tower (2) for a wind turbine (1) according to claim 1 or 2, **characterized in that** the outer diameter of the tower (2) tapers upwards in the area of the predetermined height and the at least one annular element (10, 11) has an inner diameter, which is adjusted for the outer diameter of the tower (2) such that the annular element (10, 11) rests on the tower (2) at the predetermined height, wherein the annular element (10, 11) remains on the tower (2) without further fastening.

4. The tower (2) for a wind turbine (1) according to one of claims 1 to 3, **characterized in that** the at least one annular element (10, 11) is fastened on the tower (2) in a detachable manner.

5. The tower (2) for a wind turbine (1) according to claim 4, **characterized in that** the at least one annular element (10, 11) is screwed to the tower (2).

6. The tower (2) for a wind turbine (1) according to claim 4 or 5, **characterized in that** the at least one annular element (10, 11) has a magnetic holder, with which it is fastened to the tower (2).

7. The tower (2) for a wind turbine (1) according to one of claims 1 to 6, **characterized in that** the at least one annular element (10, 11) consists of at least two annular segments each extending over a part of the periphery of the annular element (10, 11), which are interconnected in a detachable manner.

8. The tower (2) for a wind turbine (1) according to one of claims 1 to 7, **characterized in that** the annular element (10 11) is made of a fiber composite material and/or a wood material and/or steel and/or a plastic material.

9. The tower (2) for a wind turbine (1) according to one of claims 1 to 8, **characterized in that** several of the annular elements (10, 11) are arranged on the tower (2) at a distance from each other.

10. The tower (2) for a wind turbine (1) according to claim 9, **characterized in that** the distance between two neighboring annular elements (10, 11) is in the range of 2 to 10 outer diameters of the tower (2) at the height of the upper of the two neighboring annular elements (10).

11. A wind turbine (1) with a tower (2) according to one of claims 1 to 10, a nacelle (4) and a rotor (3) rotatably mounted in the nacelle (4).

12. A method for erecting a wind turbine (1) with the following steps:
• providing a wind turbine tower (2),
• arranging at least one aerodynamically effective annular element (10, 11), which has a shell surface with a diameter and a length, on the wind turbine tower (2) so that the annular element (10, 11) surrounds the wind turbine tower (2) concentrically at a predetermined height, wherein the diameter of the shell surface of the annular element (10, 11) is at least 105% of the outer diameter of the wind turbine tower (2) at the predetermined height and the length of the shell surface is at least 50% of this outer diameter and an annular gap on the upper and/or lower end of the annular element (10, 11) is closed by an annular surface of the annular element (10, 11),
• erecting the wind turbine tower (2),
• fastening a nacelle (4) and rotor (3) on the wind turbine tower (2).

13. The method according to claim 12, **characterized in that** the at least one annular element (10, 11) is removed again from the wind turbine tower (2) after the fastening of the nacelle (4) and rotor (3).

14. The method according to claim 12 or 13, **characterized in that** the outer diameter of the tower (2) tapers upwards in the area of the predetermined height and the at least one annular element (10, 11) has an inner diameter, which is adjusted for the outer diameter of the tower (2) such that the annular element (10, 11) rests on the tower (2) at the predetermined height, wherein the annular element (10, 11) remains on the tower without further fastening.

## Revendications

1. Tour (2) pour une éolienne (1) présentant au moins un élément annulaire (10, 11) à efficacité aérodynamique entourant la tour (2) de façon concentrique à une hauteur prédéfinie ainsi qu'une surface extérieure avec un diamètre et une longueur, **caractérisée en ce que** le diamètre de la surface extérieure représente au moins 105% du diamètre extérieur de la tour (2) à la hauteur prédéfinie et la longueur de la surface extérieure représente au moins 50% de ce diamètre extérieur, et **en ce qu'**une fente annulaire est fermée par une surface annulaire de l'élément annulaire (10, 11) à l'extrémité supérieure et/ou inférieure de l'élément annulaire (10, 11), la tour (2) présentant une partie de socle destiné à être relié à une fondation et une tête de tour destinée à être reliée à une nacelle (4).

2. Tour (2) pour une éolienne (1) selon la revendication 1, **caractérisée en ce que** la surface extérieure présente un espacement régulier par rapport au côté extérieur de la tour (2).

3. Tour (2) pour une éolienne (1) selon la revendication 1 ou 2, **caractérisée en ce que** le diamètre extérieur de la tour (2) s'affine vers le haut dans la région de la hauteur prédéfinie et l'au moins un élément annulaire (10, 11) présente un diamètre intérieur adapté de telle façon au diamètre extérieur de la tour (2), que l'élément annulaire (10, 11) s'applique sur la tour (2) à la hauteur prédéfinie, l'élément annulaire (10, 11) demeurant sur la tour (2) sans fixation supplémentaire.

4. Tour (2) pour une éolienne (1) selon l'une des revendications 1 à 3, **caractérisée en ce que** l'au moins un élément annulaire (10, 11) est fixé de façon amovible sur la tour (2).

5. Tour (2) pour une éolienne (1) selon la revendication 4, **caractérisée en ce que** l'au moins un élément annulaire (10, 11) est vissé (2) sur la tour (2).

6. Tour (2) pour une éolienne (1) selon la revendication 4 ou 5, **caractérisée en ce que** l'au moins un élément annulaire (10, 11) présente un support magnétique avec lequel il est fixé à la tour (2).

7. Tour (2) pour une éolienne (1) selon l'une des revendications 1 à 6, **caractérisée en ce que** l'au moins un élément annulaire (10, 11) est constitué d'au moins deux segments annulaires s'étendant respectivement sur une partie du pourtour de l'élément annulaire (10, 11), lesquels sont reliés l'un à l'autre de façon amovible.

8. Tour (2) pour une éolienne (1) selon l'une des revendications 1 à 7, **caractérisée en ce que** l'élément annulaire (10, 11) est fabriqué à partir d'un matériau composite fibreux et/ou d'un matériau à base de bois et/ou en acier et/ou en plastique.

9. Tour (2) pour une éolienne (1) selon l'une des revendications 1 à 8, **caractérisée en ce que** plusieurs des éléments annulaires (10, 11) sont disposés à une distance les uns des autres sur la tour (2).

10. Tour (2) pour une éolienne (1) selon la revendication 9, **caractérisée en ce que** la distance entre deux éléments annulaires (10, 11) voisins représente environ 2 à 10 diamètres extérieurs de la tour (2) à la hauteur de l'élément annulaire (10) voisin du haut.

11. Eolienne (2) avec une tour (2) selon l'une des revendications 1 à 10, une nacelle (4) et un rotor (3) monté de façon rotative dans la nacelle (4).

12. Procédé pour la construction d'une éolienne (1) avec les étapes suivantes :
- mise à disposition d'une tour d'éolienne (2),
- disposition d'au moins un élément annulaire (10, 11) à efficacité aérodynamique présentant une surface extérieure avec un diamètre et une longueur, sur la tour d'éolienne (2), de telle façon que l'élément annulaire (10, 11) entoure la tour d'éolienne (2) de façon concentrique à une hauteur prédéfinie, le diamètre de la surface extérieure de l'élément annulaire (10, 11) représentant au moins 105% du diamètre extérieur de la tour d'éolienne (2) à la hauteur prédéfinie et la longueur de la surface extérieure représentant au moins 50% de ce diamètre extérieur, et une fente annulaire étant fermée par une surface annulaire de l'élément annulaire (10, 11) à l'extrémité supérieure et/ou inférieure de l'élément annulaire (10, 11),
- construction de la tour d'éolienne (2),
- fixation d'une nacelle (4) et d'un rotor (3) sur la tour d'éolienne (2).

13. Procédé selon la revendication 12, **caractérisé en ce que** l'au moins un élément annulaire (10, 11) est de nouveau retiré de la tour d'éolienne (2) après la fixation de la nacelle (4) et du rotor (3).

14. Procédé selon la revendication 12 ou 13, **caractérisé en ce que** le diamètre extérieur de la tour (2) s'affine vers le haut dans la région de la hauteur prédéfinie, et l'au moins un élément annulaire (10, 11) présente un diamètre intérieur adapté de telle façon au diamètre extérieur de la tour (2), que l'élément annulaire (10, 11) s'applique sur la tour (2) à la hauteur prédéfinie, l'élément annulaire (10, 11) demeurant sur la tour (2) sans fixation supplémentaire.
